# FASCICULE DE BREVET EUROPEEN

(11) **EP 2 564 659 B1**
(45) Date de publication et mention de la délivrance du brevet: **06.01.2016**
(21) Numéro de dépôt: 11715710.7
(22) Date de dépôt: 22.04.2011
(51) Int. Cl.: H04W 84/18, H04W 40/24

(54) **PROCEDE DE CONFIGURATION D'UN DISPOSITIF D'UN RESEAU DE COMMUNICATION, DISPOSITIF ET RESEAU CORRESPONDANTS**
VERFAHREN ZUR KONFIGURATION EINER NETZWERKKOMMUNIKATIONSVORRICHTUNG, ENTSPRECHENDE VORRICHTUNG UND NETZWERK
METHOD OF CONFIGURING A NETWORK COMMUNICATION DEVICE, CORRESPONDING DEVICE AND NETWORK

(30) Priorité: 30.04.2010 FR 1053348
(43) Date de publication de la demande: 06.03.2013
(73) Titulaire: Sagemcom Energy & Telecom SAS, 92500 Rueil-Malmaison (FR)
(72) Inventeur: PERRET, Jean, F-92500 Rueil Malmaison (FR); LOSSOUARN, Yann, F-92500 Rueil Malmaison (FR)
(74) Mandataire: Maillet, Alain
(86) Numéro de dépôt international: PCT/EP2011/056494
(87) Numéro de publication internationale: WO 2011/134910

(56) Documents cités:
- WO-A1-2009/036778
- US-A1- 2006 092 896
- US-A1- 2009 252 088
- "Switching the operation mode of a zigbee node in an embedded device", IP.COM JOURNAL, IP.COM INC., WEST HENRIETTA, NY, US, 1 février 2007 (2007-02-01), XP013117854, ISSN: 1533-0001

## Description

La présente invention concerne le domaine des dispositifs prévus pour communiquer entre eux via un réseau de communication radiofréquence structuré. Plus particulièrement, elle concerne un procédé de configuration du comportement d'un tel dispositif vis-à-vis de ce réseau ainsi qu'une trame d'un signal destinée à être reçue par ce dispositif pour qu'il re-configure son comportement vis-à-vis de ce réseau.

Un réseau de communication radiofréquence est dit structuré ou encore maillé (« mesh network» en anglais) lorsque chaque dispositif de ce réseau peut communiquer avec tous les autres (maillage total) ou uniquement avec certains de ses dispositifs (maillage partiel) et ce via un voire plusieurs routeurs. Pour cela, des dispositifs et routeurs utilisent, entre autres, un même mode d'adressage et de communication.

Le déploiement d'un réseau de communication radiofréquence structuré nécessite qu'un compromis soit trouvé pour permettre une forte connectivité entre les dispositifs du réseau et ce afin d'assurer une qualité de service par multiplication des routes possibles empruntées pour l'échange de signaux entre ces dispositifs, une réactivité élevée de chacun de ces dispositifs et ce afin d'éviter des temps de latence dans le réseau et une optimisation de la consommation énergétique totale du réseau.

Dans les réseaux de communication radiofréquence structurés actuels, chaque dispositif a un comportement particulier vis-à-vis du réseau. Ainsi, certains dispositifs ont la capacité d'assurer le rôle de terminal (End-Terminal en anglais), c'est-à-dire qu'ils ont des moyens pour trouver un réseau de communication radiofréquence structuré, pour s'associer avec l'un des routeurs de ce réseau et ainsi devenir un « enfant » de ce routeur « père », en particulier dès que le lien qu'il avait avec un précédent routeur est rompu, et pour communiquer avec un autre dispositif via ce routeur « père ». De plus, en assurant leur rôle de terminal, ces dispositifs ont la capacité de limiter leur consommation énergétique en basculant en veille, par exemple, lorsque aucune donnée transitant sur le réseau ne leur est destinée pendant une période de temps prédéterminée. Ils ont également la capacité de demander à un routeur « père » si des données lui ont été destinées pendant qu'il était en veille, données qui lui sont alors envoyées par le routeur « père » (polling en anglais).

A titre d'exemple de tels dispositifs, on peut citer des capteurs de température, de pression, des détecteurs de fumée, ou encore des appareils multimédia ou tout autre appareil domestique tel qu'un réfrigérateur etc. ou un actionneur (moteur...).

Certains dispositifs d'un réseau de communication radiofréquence structuré ont la capacité d'assurer le rôle de routeur, c'est-à-dire qu'ils ont des moyens pour trouver un réseau de communication radiofréquence structuré, pour s'associer avec un voire plusieurs des routeurs de ce réseau, pour communiquer avec un routeur auquel il est associé ou avec un dispositif soit directement soit via un routeur, pour découvrir et maintenir les meilleures routes pour propager des trames de signaux qu'il reçoit, par exemple par utilisation de tables de routage (routing table en anglais) et autres tables de découverte (route discovery table en anglais). De plus, en assurant leur rôle de routeur, ces dispositifs ont la capacité de permettre à un dispositif distant de s'associer avec lui, le dispositif étant alors le père de l'association hiérarchique et le dispositif distant étant l'enfant de cette association. Ces dispositifs ont également la capacité de propager des trames de signal que ce soit selon un mode point à point ou diffusé, et de conserver en mémoire cache des données destinées à un dispositif enfant lorsque ce dernier est en veille et de propager ces données jusqu'à ce dispositif enfant lorsque ce dernier sortira de son mode de veille et qu'il le lui demandera (Polling en anglais).

Certains dispositifs qui assurent le rôle de routeur ont également la capacité de réduire leur consommation énergétique en basculant dans un mode veille.

Dans un réseau de communication radiofréquence structuré, un dispositif de ce réseau, appelé coordinateur, joue un rôle central pour structurer le réseau. Le coordinateur permet, notamment, l'attribution d'un identifiant unique à chaque autre dispositif du réseau.

Les capacités d'un dispositif sont habituellement implémentées sous forme d'un programme qui est réparti sur des couches protocolaires du modèle OSI.

Bien qu'il existe des dispositifs qui, dès leur fabrication, sont dédiés pour fonctionner soit en tant que terminal soit en tant que routeur soit en tant que coordinateur, c'est-à-dire des dispositifs qui implémentent un programme qui leur procurent soit les capacités d'un terminal, d'un routeur ou d'un coordinateur, il est connu des dispositifs qui implémentent un programme qui recouvre toutes ces capacités et ce pour diminuer le coût financier et l'espace mémoire nécessaire pour le développement et l'implémentation de ce programme. En effet, il est moins coûteux de développer un programme qui allie les capacités d'un routeur et celles d'un terminal plutôt que de développer et d'implémenter des programmes séparés.

Dans le cas où un dispositif serait muni des capacités d'un terminal et d'un routeur et d'un coordinateur, ce dispositif est configuré lors du déploiement du réseau selon le rôle qu'il doit tenir. Ainsi s'il est utilisé comme routeur, ce dispositif est configuré pour fonctionner en tant que routeur, s'il est utilisé en tant que terminal, il est configuré pour fonctionner en tant que terminal et s'il est utilisé en tant que coordinateur, il est configuré pour fonctionner en tant que coordinateur. Une fois configuré, le dispositif assure le même rôle tout au long de son utilisation dans le réseau.

Certains réseaux de communication radiofréquence structurés mettent en oeuvre des protocoles qui sont prévus pour être implémentés à un coût extrêmement réduit, et qui permettent au dispositif une utilisation réduite de ses réserves énergétiques. Ces types de réseaux appartiennent à une famille communément appelée LR WAN (Low Rate Wireless Area Network en anglais). Les réseaux ZigBee basés sur la technologie IEEE 802.15.4 ou encore les réseaux Bluetooth ou 6LoWPAN (IETF RFC 4944) sont des exemples de ces types de réseaux de communication radiofréquence structurés qui sont prévus pour des communications à courte distance. On peut également citer comme autre exemple le réseau plus longue distance utilisé dans le système mondial de détresse et de sécurité en mer (SMDSM ou en anglais GMDSS) qui utilise des moyens de télécommunication pour la recherche et le sauvetage en mer et la prévention des accidents maritimes.

Selon les contraintes de portée et de flexibilité d'une application visée, l'utilisation d'un réseau de communication radiofréquence structuré impose que des routeurs (ou dispositifs configurés pour fonctionner en tant que routeurs) soient déployés géographiquement à proximité des terminaux (ou dispositifs configurés pour fonctionner en tant que terminaux) pour qu'une connexité souhaitée du réseau soit obtenue.

De plus, les routeurs doivent rester la plupart du temps (voire en permanence) alimentés pour assurer la connexité des terminaux avec le réseau et ainsi garantir la propagation rapide d'une trame de signal en provenance d'un terminal (dispositif enfant de ce routeur) ou d'un autre routeur voisin.

L'alimentation en énergie des routeurs est importante et requiert donc une connexion filaire au réseau d'alimentation électrique. D'où un coût financier de l'infrastructure filaire d'alimentation de ces routeurs qui est d'autant plus important que la zone géographique sur laquelle l'application visée est étendue.

De plus, une partie des éléments de ces routeurs (ou dispositifs configurés pour fonctionner en tant que routeurs) doit rester alimentée pour écouter si les trames de signaux qui transitent sur le réseau ne leur sont pas destinées. L'inventeur a observé que cette consommation des routeurs pour écouter les trames qui transitent sur le réseau est de l'ordre de celle qu'ils utilisent pour l'émission de trames de signaux.

Ainsi, bien que les terminaux actuels (dispositifs configurés pour fonctionner en tant que terminaux) basculent dans un mode de veille pour économiser la consommation énergétique globale du réseau, la consommation énergétique des infrastructures des réseaux de communication radiofréquence structurés est relativement importante du fait de la consommation des routeurs (dispositifs configurés pour fonctionner en tant que routeurs) nécessaire pour maintenir la connexité de ce réseau.

Pour réduire la consommation énergétique, la technologie ZigBee propose une solution pour qu'un routeur bascule en veille lorsque ce dernier en a la capacité (sleeping routers en anglais). Ce routeur, une fois en veille, est réveillé périodiquement par réception d'une trame d'un signal émise sur le réseau. La norme IEEE 802.15.4 prévoit également le réveil d'un routeur par émission périodique d'un signal de balise (*bacon* en anglais) dans le cas d'une communication de type TDMA. Ce signal de balise synchronise le réveil de l'ensemble des terminaux et routeurs du réseau qui sont alors mis en veille pendant certains intervalles de temps (*slots* de temps de trame) et qui sont réveillés pendant d'autres intervalles de temps (les autres *slots* de trame).

De telles solutions permettent de minimiser la consommation énergétique globale d'un réseau de communication radiofréquence structuré mais ces solutions ne sont pas adaptées dans le cas d'une application qui nécessite une forte réactivité des dispositifs. En effet, lorsque les dispositifs doivent être réveillés dès qu'un événement se produit sur le réseau, tel que par exemple lorsque l'un des dispositifs du réseau détecte un incident et que cet incident doit être rapidement propagé dans le réseau, ces solutions induisent des temps de latence pour la propagation de cet événement. C'est le cas notamment, des applications d'alarme incendie dans lesquelles il est impératif que la détection d'un incendie soit propagée sur le réseau très rapidement c'est-à-dire que le moment entre la détection de l'incendie et la propagation de cet événement jusqu'à un dispositif central soit minimal pour prévenir les secours. Les solutions proposées par les nonnes ZigBee et IEEE 802.15.4 introduisent des temps de latence de l'ordre de grandeur de la périodicité de l'émission de la trame de réveil ou des durées des *slots* de trame pendant lesquels les routeurs sont en veille. Ainsi, la détection d'un incendie ne sera propagée dans ce type de réseau uniquement lorsqu'une trame de réveil sera émise ou uniquement à partir du début des *slots* de trame dédiés au réveil des dispositifs et autres routeurs du réseau.

De plus, lors d'une extension d'un réseau de communication radiofréquence structuré existant, l'ajout d'un nouveau terminal (dispositif configuré pour fonctionner en tant que terminal) se trouvant en dehors de la portée des routeurs (des dispositifs configurés pour fonctionner en tant que routeurs) du réseau, requiert qu'un nouveau routeur soit positionné proche de ce nouveau terminal. Un cas similaire peut se produire aussi lorsque la connexité d'un terminal au réseau est jugée insuffisante et qu'un autre routeur doit être ajouté pour l'augmenter. D'où le coût élevé d'une extension ou amélioration de la connexité d'un réseau de communication radiofréquence structuré existant lorsque l'extension couvre un territoire important ou lorsque sa connexité doit être importante.

US 2009/252088 A1 décrit un système qui permet de router du trafic entre deux stations de bases (BS) via un terminal (AT). Cela permet d'étendre la couverture du réseau. Une station de base diffuse une sollicitation à des terminaux pour découvrir ceux qui peuvent agir en tant que routeurs. Une durée et une qualité de service sont ensuite négociées entre les stations de base à relier et le terminal qui va agir en tant que routeur. Des ressources réseau sont alors allouées par les stations de base au terminal qui va agir en tant que rouleur.

L'article « Switching the operation mode of a Zigbee node in an embedded device », IP.COM INC) décrit un système Zigbee dans lequel un contrôleur collecte des informations de capteurs. Ce contrôleur est alors coordinateur du réseau PAN auquel appartiennent les capteurs. Pour pouvoir transmettre les informations collectées à un dispositif portable (handheld device), le contrôleur change de réseau PAN. Pour ce faire, le dispositif portable utilise un émetteur/récepteur radio à très faible puissance qui signale au contrôleur qu'il doit passer d'un mode coordinateur (coordinator mode) à un mode feuille (leaf mode) et se joindre à un réseau PAN donné. Dès que le dispositif portable éjecte le contrôleur de ce réseau PAN donné, le contrôleur rejoint son PAN d'origine et reprend son rôle de coordinateur.

WO 2009/036778 A1 décrit une unité de production qui, sur réception d'un signal interprété comme un chargement de mode, bascule d'un mode opérationnel (de production) à un autre mode, qui peut être par exemple un mode diagnostique.

L'un des problèmes résolus par la présente invention est d'optimiser le compromis entre une forte connexité entre les dispositifs du réseau même étendu sur une zone géographique importante, une forte réactivité de chacun des dispositifs de ce réseau et une faible consommation énergétique globale du réseau.

A cet effet, la présente invention consiste, de manière générale, à faire transiter sur le réseau une trame qui comporte une information de configuration du comportement d'un dispositif vis-à-vis de ce réseau dès que ce dispositif intervient pour l'échange d'une donnée sur le réseau.

Selon l'un de ses aspects, la présente invention concerne un procédé de configuration du comportement d'un dispositif selon la revendication 1.

D'autres caractéristiques du procédé sont énoncées dans la revendication 2.

La présente invention concerne en outre un dispositif selon la revendication 3 et un réseau de communication radiofréquence structuré selon la revendication 4.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
La Fig. 1 représente schématiquement une trame d'un signal selon la présente invention,
La Fig. 2 représente un diagramme des étapes du procédé de configuration du comportement d'un dispositif d'un réseau de communication radiofréquence structuré,
La Fig. 3 représente un exemple d'un réseau de communication sans fil structuré, et
La Fig. 4 représente un exemple d'un réseau de communication sans fil structuré.

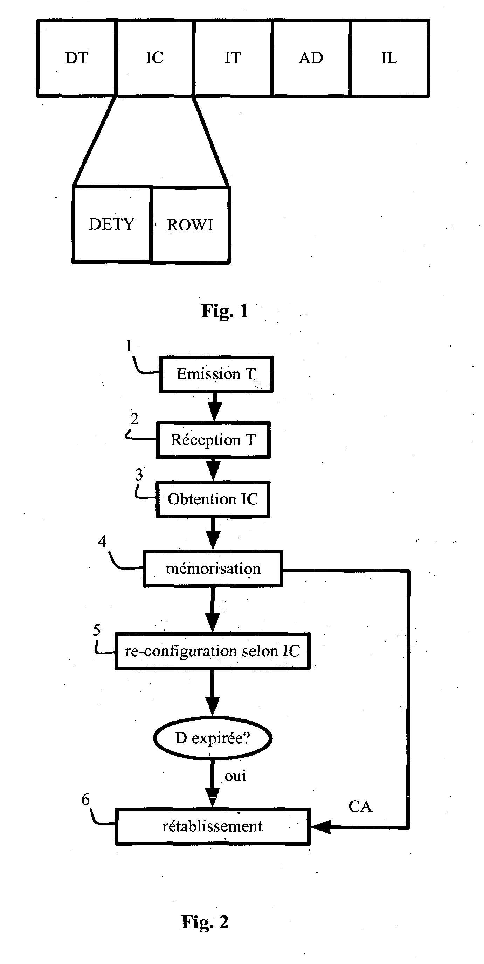

Tel que illustré à la Fig. 1, la trame T comporte un identifiant de trame DT qui indique son type. Un dispositif peut ainsi déterminer le type de la trame T qu'il a reçue et appliquer des moyens particuliers pour extraire de cette trame les informations qu'elle porte.

La trame T comporte une information IC, dite information de configuration, dont la valeur définit une re-configuration du comportement d'un dispositif vis-à-vis du réseau.

Selon un mode de réalisation, l'information de configuration IC indique au dispositif qu'il doit se re-configurer pour fonctionner soit en tant que routeur soit en tant que terminal.

Selon une variante, l'information IC indique à ce dispositif de se re-configurer pour inverser son fonctionnement vis-à-vis du réseau. Ainsi, si le dispositif fonctionnait en tant que terminal, le dispositif se re-configure pour fonctionner en tant que routeur et si le dispositif fonctionnait en tant que routeur, le dispositif se re-configure pour fonctionner en tant que terminal.

Selon un mode de réalisation, l'information de configuration IC indique également au dispositif qu'il doit activer ou désactiver ses moyens pour écouter si une trame transite sur le réseau lorsque ce dispositif est en veille et ce que le dispositif fonctionne en tant que terminal ou en tant que routeur.

Selon une variante, l'information IC indique à ce dispositif d'inverser l'activation de ses moyens d'écoute qui sont alors désactivés s'ils étaient jusque-là activés et réciproquement de les activer s'ils étaient désactivés jusque là.

Selon un mode de réalisation, la trame T comporte, de plus, une information de temps IT qui définit une durée D à l'issue de laquelle le dispositif retrouve son comportement vis-à-vis du réseau qu'il avait avant sa re-configuration.

Selon un mode de réalisation, la trame T comporte également une information AD qui désigne le dispositif qui doit être re-configuré.

Ainsi, en donnant à l'information AD une valeur particulière, par exemple la valeur NULL, un dispositif qui reçoit la trame T comprend que cette trame lui est destinée et dans le cas où cette valeur serait différente de NULL, ce dispositif comprend qu'il faut relayer la trame T vers le dispositif dont l'adresse est celle indiquée par l'information AD.

Selon un mode de réalisation, la trame comporte également une information IL qui indique au dispositif (père) qui la reçoit, d'effectuer une action vis-à-vis des dispositifs (enfants) du réseau qui lui sont associés. Cette action est soit de supprimer les dispositifs enfants, soit d'indiquer à chacun de ces dispositifs enfants de relayer la trame reçue à destination de leurs éventuels enfants.

Le format de la trame T dépend de la technologie utilisée pour mettre en oeuvre le réseau de communication radiofréquence structuré.

Dans le cas de la norme ZigBee, la trame T peut être formatée, par exemple en allouant 8 bits pour DT, 8 bits pour IC, 8 bits pour IT, 64 bits pour AD et 1 bit pour IL.

La Fig. 2 représente un diagramme des étapes du procédé de configuration du comportement d'un dispositif vis-à-vis d'un réseau de communication radiofréquence structuré.

Le procédé comporte une étape 1 d'émission d'une trame T, une étape 2 de réception de la dite trame et une étape 3 d'obtention de l'information IC à partir de la trame T reçue.

Selon un mode de réalisation, au cours de l'étape 1, la trame est émise par un dispositif suite à un événement interne qui survient sur ce dispositif. Cet événement peut être un événement émanant de l'un des programmes implémentés par ce dispositif et être, éventuellement, programmé dans le temps. Par exemple, une trame T est émise suite à un événement logiciel qui provoque la prise d'une mesure de l'environnement proche du dispositif (température, pression, détection d'incendie etc.)

Selon un mode de réalisation, au cours de l'étape 1, la trame est émise suite à la réception par un dispositif d'un événement qui lui est externe. Par exemple, cet événement peut être une intervention d'un utilisateur sur ce dispositif ou la réception d'un signal via une communication radiofréquence ou filaire autre que celle établie sur le réseau de communication radiofréquence structuré.

Selon un mode de réalisation de l'étape 1, la trame T est diffusée sur le réseau et selon un autre mode, cette trame est émise à destination d'un dispositif particulier du réseau.

Le procédé comporte également une étape 5 de re-configuration du comportement du dispositif vis-à-vis du réseau selon l'information IC.

Selon un mode de réalisation de l'étape 5, le dispositif est re-configuré selon l'information IC s'il en a la capacité et s'il n'est pas déjà configuré comme le définit l'information IC.

Selon un exemple de réalisation, au cours de l'étape 5, lorsque l'information IC indique à un dispositif qu'il doit se re-configurer pour fonctionner en tant que routeur, le dispositif ne se re-configure en tant que routeur que si ses réserves d'énergie le lui permettent.

Selon un mode de réalisation, au cours de l'étape 5, lorsque l'information IC indique que les moyens d'écoute du dispositif doivent être activés, le dispositif active ses moyens d'écoute lorsqu'il est en veille.

Selon un mode de réalisation, le procédé comporte également une étape 4 de mémorisation de la configuration CA du comportement du dispositif vis-à-vis du réseau. Cette étape est antérieure à l'étape 5. Le procédé comporte alors également une étape 6 de rétablissement de la configuration, au cours de laquelle à l'issue d'une durée D, le dispositif est à nouveau configuré selon la configuration mémorisée CA.

La durée D peut être prédéfinie et mémorisée par le dispositif. Mais elle peut également être définie à partir de l'information IT qui est extraite de la trame T et ce uniquement si la valeur de l'information IT n'indique pas une durée D infinie. Dans ce cas, les étapes 4 et 6 ne sont pas exécutées. Selon un mode de réalisation, un timer est initialisé avec cette durée D et l'étape 6 est exécutée lorsque ce timer claque.

Selon un mode de réalisation, l'étape 6 est préemptée soit par un événement interne au dispositif, soit par un événement externe au dispositif. Cet événement interne peut être un événement émanant de l'un des programmes implémentés par ce dispositif et être, éventuellement, programmé dans le temps, par exemple la prise d'une mesure de l'environnement proche du dispositif (température, pression, détection d'incendie etc.). Cet événement externe peut être une intervention d'un utilisateur sur ce dispositif ou la réception d'une nouvelle trame T.

Lorsque l'étape 6 est préemptée, le timer relatif à la durée D n'a plus d'effet sur le dispositif.

La mise en oeuvre de l'un des modes de réalisation du procédé décrit en relation avec la Fig. 2 dépend de la capacité du dispositif à assurer le rôle de terminal, de routeur et/ou d'activer/désactiver ses moyens lorsqu'il est en veille, et du contenu de la trame T.

Dans sa version minimaliste, un dispositif comporte des moyens pour extraire l'information IC de la trame T et des moyens pour mettre en oeuvre les étapes 1, 2, 3 et 5 tandis que dans sa version complète, le dispositif comporte également des moyens pour mettre en oeuvre les étapes 4 et 6.

Quel que soit le procédé mis en oeuvre par le dispositif, son implémentation respecte le protocole imposé par le réseau utilisé. Par exemple, dans un réseau Zigbee, le protocole de communication indique, entre autres, que l'émission d'un signal par un dispositif est soumise à une autorisation préalable et qu'une réponse est émise par un dispositif qui a reçu une commande. Cette réponse achemine un compte-rendu de l'application de cette commande sur le dispositif qui l'a reçue.

La mise en oeuvre du procédé sur un réseau Zigbee impose donc à un dispositif de comporter de plus des moyens pour identifier qu'une commande reçue est formatée selon la trame T décrite en relation avec la Fig. 1. A cet effet, l'identifiant DT de la trame est utilisé. Ce dispositif comporte également des moyens pour générer une telle commande mais également une réponse qui peut, par exemple, comporter un identifiant de trame et un champ état qui indique le compte-rendu de l'application de cette commande sur le dispositif qui l'a reçue. Le champ état peut indiquer soit que le dispositif s'est re-configuré conformément à la commande (valeur SUCCESS), soit que ce dispositif ne reconnaît pas cette commande ou qu'il n'a pas la capacité de re-configurer son comportement conformément à cette commande (valeur NOT-SUPPORTED), soit qu'une erreur interne est survenue lors de la re-configuration du dispositif (valeur ERROR).

Ainsi, suite à la réception d'une trame T ou une fois que le dispositif s'est re-configuré ou tenté de le faire, le dispositif émet systématiquement une réponse à destination du dispositif émetteur de cette commande qui comporte le compte-rendu de sa re-configuration.

Par ailleurs, un dispositif d'un réseau Zigbee maintient en mémoire des informations concernant la configuration de son comportement vis-à-vis du réseau. Ces informations, appelées capacity information en anglais, comportent, entre autres, une information DDETY qui détermine si le dispositif fonctionne en tant que terminal (valeur égale par exemple à TERMINAL) ou en tant que routeur (valeur par exemple égale à ROUTEUR), et une information DROWI qui indique l'état d'activation des moyens qu'a ce dispositif pour écouter si une trame transite sur le réseau lorsque ce dispositif est en mode veille. Cette information vaut par exemple TRUE si ces moyens sont activés et FALSE si ces moyens sont désactivés. Il peut également maintenir en mémoire une information DIL qui indique si une action doit être effectuée sur des éventuels dispositifs enfants et dans ce cas la nature de cette action. Dans ce cas, l'information IC comporte, entre autres, une information DETY qui détermine si le dispositif doit se re-configurer en tant que terminal (valeur égale par exemple à TERMINAL) ou en tant que routeur (valeur par exemple égale à ROUTEUR), et une information ROWI qui indique si les moyens qu'a ce dispositif pour écouter si une trame transite sur le réseau lorsque ce dispositif est en mode veille doivent être activés ou pas.

Bien évidemment, si un dispositif ne comporte pas des moyens pour modifier son fonctionnement ou pour modifier l'état d'activation de ses moyens d'écoute, ce dispositif ne maintient pas en mémoire ces informations.

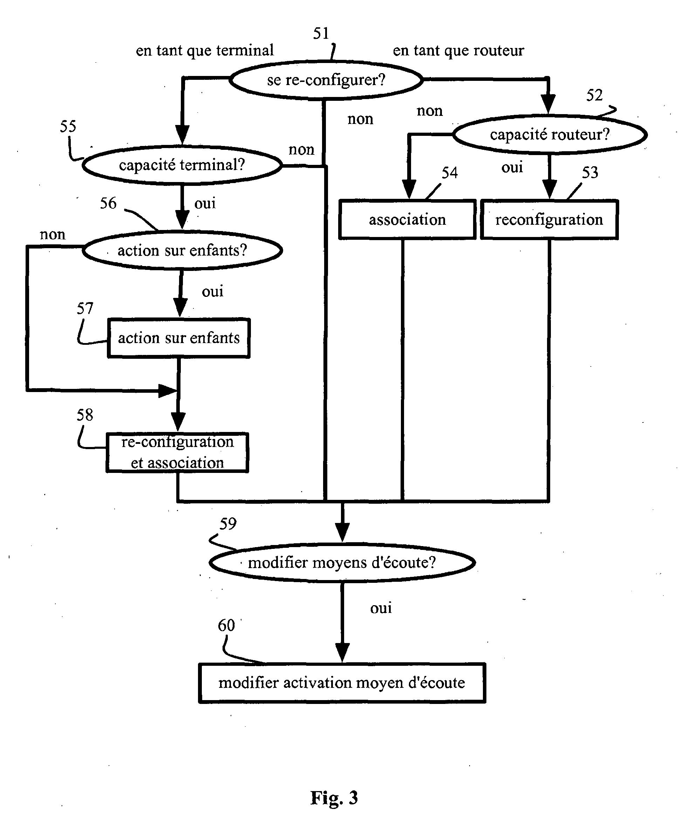

La Fig. 3 représente un mode de réalisation du procédé de la Fig. 2 lorsque la trame T comporte l'ensemble des champs décrits en relation avec la Fig. 1, c'est-à-dire que la trame T comporte l'information IC et les informations IT, AD et IL. Le lecteur comprendra que si d'autres modes de réalisation de cette trame sont utilisés, le procédé décrit à la Fig. 3 pourra être allégé en supprimant les parties qui correspondent à ces informations manquantes. Les étapes 1, 2 et 3 restent inchangées par rapport à la Fig. 2.

L'étape 3 débute par une sous-étape 51 au cours de laquelle il est déterminé si le dispositif doit se re-configurer en tant que routeur ou en tant que terminal par comparaison des informations DDETY et DETY (information portée par l'information IC d'une trame T reçue). Si DDETY et DETY sont égales à la même valeur, le dispositif n'a pas à re-configurer son fonctionnement.

Si le dispositif doit se re-configurer en tant que routeur, le procédé se poursuit par une sous-étape 52 au cours de laquelle il est vérifié si le dispositif a la capacité de fonctionner en tant que routeur.

Si le dispositif a la capacité de fonctionner en tant que routeur, le dispositif se re-configure en tant que routeur et modifie son information locale DDETY qui vaut maintenant ROUTEUR (sous-étape 53).

Si le dispositif n'a pas la capacité de fonctionner en tant que routeur, le dispositif s'associe avec un routeur du réseau (ou un dispositif distant fonctionnant en tant que routeur) (sous-étape 54). Le dispositif devient alors un dispositif enfant par rapport à ce routeur. Dans le cas où le dispositif était déjà présent sur le réseau avant sa re-configuration, il peut éventuellement conserver son adresse réseau. Par exemple, dans un réseau Zigbee, un dispositif est considéré comme étant présent sur le réseau si une adresse courte et une adresse longue (identifiant PANID unique du dispositif dans le réseau) ont été affectées à ce dispositif, si son information réseau (Network Information Base en anglais), sa table de voisins (Neighbor table) contient l'adresse du routeur père avec lequel il est associé et ce dispositif père contient l'adresse de ce dispositif (enfant) dans sa table de voisins, si le dispositif contient toutes les clefs de sécurité courantes du réseau qui sont, entre autres, utilisées dans le réseau pour obtenir la permission d'émettre un signal.

Si le dispositif doit se re-configurer en tant que terminal, le procédé se poursuit par une sous-étape 55, au cours de laquelle le dispositif vérifie s'il a la capacité de fonctionner en tant que terminal. Si c'est le cas, le dispositif vérifie s'il a reçu une indication lui demandant de relayer la trame T vers ses enfants et/ou de rompre les associations avec ses dispositifs enfants avant de se re-configurer (sous-étape 56). Cette indication est par exemple portée par l'information IL de la trame T. Si c'est le cas, le dispositif exécute cette action vis-à-vis de ses dispositifs enfants en nettoyant, entre autres, ses tables de routage et de découverte de routes (sous-étape 57). Le dispositif se re-configure alors en tant que terminal et modifie son information locale DDETY qui vaut maintenant TERMINAL. Le dispositif, fonctionnant alors en tant que terminal, s'associe à un routeur du réseau et, s'il était déjà présent sur le réseau avant sa re-configuration, conserve son adresse réseau (sous-étape 58).

L'intérêt d'un dispositif de se re-configurer en tant que terminal alors qu'il fonctionnait jusque-là en tant que routeur est de libérer des ressources de ce dispositif lorsqu'il en a besoin par exemple pour une prise de mesure ou de limiter le rôle de ce dispositif lorsque ses réserves énergétiques sont insuffisantes ou à des fins de maintenance de ce dispositif.

Les sous-étapes 51, 53, 54, 55 et 58 se poursuivent par une sous-étape 59 au cours de laquelle il est déterminé si l'état d'activation des moyens d'écoute du dispositif doit être modifié par comparaison des informations ROWI (information portée par l'information IC d'une trame T reçue) et DROWI. Si ces informations ont des valeurs différentes, l'information DROWI devient égale à ROWI. Ainsi, un dispositif fonctionnant soit en tant que routeur, soit en que terminal, active ou pas ses moyens d'écoute lorsqu'il se trouve en mode veille par simple consultation de la valeur de l'information DROWI.

Lorsque le dispositif se re-configure, il peut être nécessaire que ce dispositif doive redémarrer. Dans ce cas, le dispositif met en oeuvre une procédure particulière définie par le protocole de communication utilisé sur le réseau.

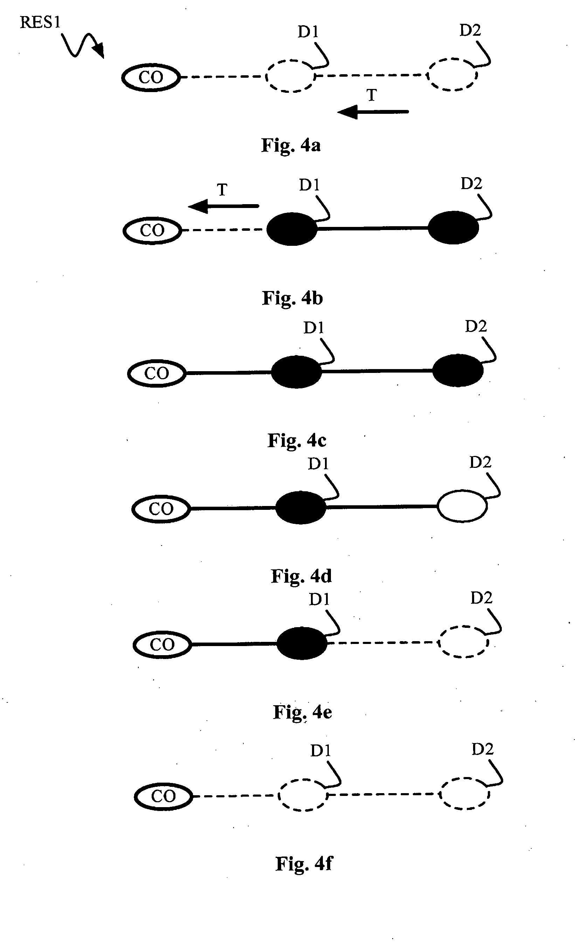

La Fig. 4 représente un exemple d'un réseau de communication sans fil structuré. Selon cet exemple, qui ne limite en rien la présente invention mais qui n'est donné ici qu'à titre d'exemple pour illustrer l'utilisation du procédé, le réseau de communication sans fil structuré RES1 comporte un coordinateur CO et deux dispositifs D1 et D2 tels que décrits précédemment et qui ont la capacité d'être configurés pour fonctionner soit en tant que terminal soit en tant que routeur. L'homme du métier est en mesure de réaliser de tels dispositifs à partir de l'état de la technique. Il pourra se référer, par exemple, aux normes Zigbee et IEEE 802.15.4 qui décrivent un protocole de communication pour les couches réseau, MAC et physiques de ces dispositifs et coordinateur.

Sur les Figs., les dispositifs sont représentés par des ovales. Un dispositif est représenté par un ovale de couleur blanche lorsque ce dispositif est configuré pour fonctionner en tant que terminal, par un ovale de couleur noire lorsque ce dispositif est configuré pour fonctionner en tant que routeur et par un ovale en pointillé lorsque ce dispositif est en veille, que ce dispositif soit configuré pour fonctionner en tant que routeur ou en tant que terminal. De plus, un trait plein reliant deux ovales représente un lien actif entre deux éléments du réseau, c'est-à-dire que ces deux éléments sont associés l'un à l'autre. Un trait pointillé entre deux ovales représente un lien possible mais inactif entre deux éléments, c'est-à-dire que ces éléments sont à portée l'un de l'autre.

Selon l'exemple de la Fig. 4a, admettons que le dispositif D1 est initialement configuré en tant que routeur pouvant se mettre en veille et que ses moyens d'écoute soient activés lorsqu'il est en veille (DDETY=ROUTEUR, DROWI=TRUE) tandis que le dispositif D2 est initialement configuré en tant que terminal et que ses moyens d'écoute soient désactivés lorsqu'il est en veille (DDETY=TERMINAL, DROWI=FALSE). Les deux dispositifs sont en veille et la connexité du réseau RES1 est inexistante.

Admettons que le dispositif D2 soit réveillé par un événement interne à D2. Ce dispositif génère alors une trame T dont l'information DETY égale ROUTEUR pour indiquer au dispositif D1 de se re-configurer en tant que routeur, l'information ROWI=TRUE pour indiquer au dispositif D1 d'activer ses moyens d'écoute lorsqu'il est en veille, l'information AD=NULL pour indiquer que cette trame est destinée au dispositif qui le reçoit, en l'occurrence D1, l'information IL égale FALSE pour indiquer qu'aucune action n'est à faire concernant les éventuels dispositifs enfants de D1 et l'information IT permet de définir une durée D finie. Le dispositif D2 émet alors la trame T (étape 1).

Le dispositif D1 qui est alors à l'écoute de trame qui transite sur le réseau, reçoit la trame T (étape 2) et obtient les informations de la trame T (étape 3). Le dispositif D1 mémorise alors ses informations locales DDETY, DROWI et DIL et la durée D est déterminée à partir de l'information IT et un timer est initialisé à la valeur D (étape 4).

Par ailleurs, puisque DDETY est égale à DETY (sous-étape 51) étant donné que D1 fonctionnait jusque-là en tant que routeur, D1 n'a pas à re-configurer son fonctionnement. Le dispositif D2 détectant alors un routeur dans son environnement, s'associe à ce routeur. Par ailleurs, puisque les moyens d'écoute de D1 étaient déjà activés (sous-étape 59) et, à l'issue du procédé, le réseau se retrouve dans la situation de la Fig. 3b.

Le dispositif D1 émet alors à son tour une trame T étant donné qu'il fonctionne en tant que routeur et le dispositif D2 se retrouve alors connecté avec le coordinateur CO pour lui envoyer, par exemple, des informations de mesure (Fig. 4c).

Une fois que le timer de D2 claque, le dispositif D2 est re-configuré selon la configuration mémorisée (étape 6). Ainsi, le dispositif D2, selon l'exemple, se re-configure selon sa configuration mémorisée, en l'occurrence en tant que terminal (DDETY=TERMINAL, DROWI=FALSE). A cet effet, selon cet exemple, le test effectué à la sous-étape 55 est vérifié puisque le dispositif D2 fonctionnait en tant que terminal avant sa re-configuration.

Il peut s'être produit le cas où durant la durée D, des dispositifs se sont associés au dispositif D2. Dans ce cas, une action sur ces dispositifs enfants est réalisée par le dispositif D2 suivant l'information DIL (sous-étapes 56 et 57), puis le dispositif D2 est reconfiguré et associé au dispositif D1 fonctionnant alors en tant que routeur (Fig. 4d).

Lorsque le dispositif D2 ou le dispositif D1 bascule en veille, le lien entre D1 et D2 est rompu (Fig. 4e) et lorsque le dispositif D1 bascule en veille, son lien avec le coordinateur CO est également rompu (Fig. 4f).

A travers de cet exemple, on comprend comment la connexité d'un réseau de communication radiofréquence structuré est dynamiquement établie dès qu'un dispositif émet une trame T et comment cette connexité est rompue dès que l'activité des dispositifs de ce réseau disparaît.

On comprend également que le procédé peut également être utilisé pour étendre un réseau existant. En effet, considérons un réseau comportant un coordinateur, des routeurs (et/ou dispositifs susceptibles d'être configurés pour fonctionner en tant que routeurs) et des terminaux (et/ou des dispositifs susceptibles d'être configurés pour fonctionner en tant que terminaux). Lorsqu'un terminal éloigné géographiquement d'un routeur doit être en mesure de communiquer avec un dispositif ou avec le coordinateur de ce réseau existant, il suffit d'implémenter le procédé sur ce terminal, alors pourvu de moyens pour acquérir la capacité d'un routeur, pour pouvoir déployer un sous-réseau dont le point d'accès sera ce terminal évolué.

On peut également utiliser ce procédé sur des réseaux dont les dispositifs ne sont actifs que très rarement par exemple lorsqu'un de ses dispositifs doit récolter des mesures des autres dispositifs que périodiquement ou lorsque des données ne sont échangées sur le réseau que lorsque l'un de ces dispositifs détecte une anomalie dans son environnement proche tel que dans le cas d'une application de détection d'incendie.

## Revendications

1. Procédé de configuration du comportement d'un dispositif vis-à-vis d'un réseau de communication radiofréquence structuré, comportant :
- une étape (2) de réception, par ledit dispositif, d'une trame comportant une information, IC, de configuration, dont la valeur définit une re-configuration du comportement d'un dispositif vis-à-vis de ce réseau ;
- une étape (3) d'obtention à partir de la trame T reçue de l'information de configuration ;
- une étape (5) de re-configuration du comportement du dispositif vis-à-vis du réseau selon l'information de configuration obtenue ;
**caractérisé en ce que**, lorsque le dispositif est configuré comme routeur, lorsque l'information de configuration, IC, définit une re-configuration du dispositif en terminal et lorsque la trame reçue comporte en outre une information d'action, IL, qui indique audit dispositif d'effectuer une action vis-à-vis d'au moins un dispositif enfant du réseau qui lui est hiérarchiquement associé pour la propagation de trames dans le réseau, ledit dispositif effectue, avant l'étape (5) de re-configuration, en outre une étape d'exécution de ladite action vis-à-vis dudit ou desdits dispositifs enfant
et **en ce que** l'information d'action indique audit dispositif de propager ladite trame audit ou auxdits dispositifs enfant, et ledit dispositif effectue une étape de propagation de ladite trame audit ou auxdits dispositifs enfant avant de se reconfigurer comme terminal,
ou **en ce que** l'information d'action indique audit dispositif de rompre chaque association avec ledit ou lesdits dispositifs enfant, et ledit dispositif effectue une étape de notification de rupture d'association audit ou auxdits dispositifs enfant avant de se reconfigurer comme terminal.

2. Procédé selon la revendication 1, dans lequel au cours de l'étape (5) de re-configuration, lorsque l'information de configuration, IC, indique que les moyens d'écoute du dispositif doivent être activés, le dispositif active ses moyens d'écoute lorsqu'il est en veille.

3. Dispositif destiné à être utilisé dans un réseau de communication radiofréquence structuré, comportant :
- des moyens de réception, par ledit dispositif, d'une trame comportant une information, IC, de configuration, dont la valeur définit une re-configuration du comportement d'un dispositif vis-à-vis de ce réseau ;
- des moyens d'obtention à partir de la trame T reçue de l'information de configuration ;
- des moyens de re-configuration du comportement du dispositif vis-à-vis du réseau selon l'information de configuration obtenue ;
**caractérisé en ce qu'**il comporte en outre des moyens d'exécution d'une action vis-à-vis d'au moins un dispositif enfant du réseau qui lui est hiérarchiquement associé pour la propagation de trames dans le réseau, lorsque le dispositif est configuré comme routeur, lorsque l'information de configuration, IC, définit une re-configuration du dispositif en terminal et lorsque la trame reçue comporte en outre une information d'action, IL, qui indique audit dispositif d'effectuer ladite action,
et **en ce que** l'information d'action indique audit dispositif de propager ladite trame audit ou auxdits dispositifs enfant, et ledit dispositif comporte des moyens de propagation de ladite trame audit ou auxdits dispositifs enfant avant de se reconfigurer comme terminal,
ou **en ce que** l'information d'action indique audit dispositif de rompre chaque association avec ledit ou lesdits dispositifs enfant, et ledit dispositif comporte des moyens de notification de rupture d'association audit ou auxdits dispositifs enfant avant de se reconfigurer comme terminal.

4. Réseau de communication radiofréquence structuré comportant un ensemble de dispositifs, **caractérisé en ce qu'**au moins un de ces dispositifs est conforme à la revendication 3.

## Patentansprüche

1. Verfahren zum Konfigurieren des Verhaltens einer Vorrichtung gegenüber einem strukturierten Radiofrequenz-Kommunkationsnetzwerk, umfassend :
- einen Schritt (2) des Empfanges, durch die genannte Vorrichtung, eines Blocks, der eine Konfigurationsinformation IC enthält, deren Wert ein Umkonfigurieren des Verhaltens der Vorrichtung gegenüber diesem Netzwerk definiert,
- einen Schritt (3) des Gewinnens der Konfigurationsinformation aus dem empfangenen Block T,
- einen Schritt (5) des Umkonfigurierens des Verhaltens der Vorrichtung gegenüber dem Netzwerk entsprechend der gewonnenen Konfigurationsinformation, **dadurch gekennzeichnet, dass** die genannte Vorrichtung, wenn sie als Router konfiguriert ist, wenn die Konfigurationsinformation IC ein Umkonfigurieren des Endgeräts definiert und wenn der empfangene Block zudem eine Handlungsinformation umfasst, die der genannten Vorrichtung anzeigt, dass eine Handlung gegenüber wenigstens einer, ihr für die Verbreitung von Blöcken im Netz hierarchisch zugeordneten Kind-Vorrichtung des Netzwerks, auszuführen ist, vor dem Schritt (5) des Umkonfigurierens zudem einen Schritt umfasst, bei dem die genannte Handlung gegenüber der oder den genannten Kind-Vorrichtungen ausgeführt wird,
und dadurch, dass die Handlungsinformation der Vorrichtung anzeigt, dass der genannte Block an die genannte oder genannten Kind-Vorrichtungen zu verbreiten ist und die genannte Vorrichtung einen Schritt ausführt, bei dem der genannte Block an die genannte oder genannten Kind-Vorrichtungen verbreitet wird, bevor sie sich zum Endgerät umkonfiguriert,
oder dadurch, dass die Handlungsinformation der genannten Vorrichtung anzeigt, dass jede Zuordnung zu der oder den genannten Kind-Vorrichtungen abzubrechen ist und die genannte Vorrichtung einen Schritt ausführt, bei dem der Zuordnungsabbruch der oder den genannten Kind-Vorrichtungen bekanntgegeben wird, bevor sie sich zum Endgerät umkonfiguriert.

2. Verfahren nach Patentanspruch 1, in dem die Vorrichtung während des Umkonfigurationsschritts (5), wenn die Konfigurationsinformation IC anzeigt, dass die Abhörmittel der Vorrichtung aktiviert werden müssen, ihre Abhörmittel aktiviert, wenn sie sich im Bereitschaftsmodus befindet.

3. Vorrichtung, die zur Benutzung in einem strukturierten Radiofrequenz-Kommunkationsnetzwerk bestimmt ist, umfassend :
- Mittel zum Empfangen, durch die genannte Vorrichtung, eines Blocks, der eine Konfigurationsinformation IC enthält, deren Wert ein Umkonfigurieren des Verhaltens einer Vorrichtung gegenüber diesem Netzwerk definiert,
- Mittel zum Gewinnen der Konfigurationsinformation aus dem empfangenen Block T,
- Mittel zum Umkonfigurieren des Verhaltens der Vorrichtung gegenüber dem Netzwerk entsprechend der erhaltenen Konfigurationsinformation,
**dadurch gekennzeichnet, dass** sie zudem Mittel zum Ausführen einer Handlung gegenüber wenigstens einer, ihr für die Verbreitung von Blöcken in dem Netzwerk hierarchisch zugeordneten Kind-Vorrichtung des Netzwerks umfasst, wenn die Vorrichtung als Router konfiguriert ist, wenn die Konfigurationsinformation IC eine Umkonfiguration der Vorrichtung zum Endgerät definiert und wenn der empfangene Block zudem eine Handlungsinformation IL enthält, die der genannten Vorrichtung anzeigt, dass die genannte Handlung auszuführen ist,
und dadurch, dass die Handlungsinformation der genannten Vorrichtung anzeigt, dass der genannte Block an die genannte oder genannten Kind-Vorrichtungen zu verbreiten ist, bevor sie sich zum Endgerät umkonfiguriert,
oder dadurch, dass die Handlungsinformation der genannten Vorrichtung anzeigt, dass jede Zuordnung zu der oder den genannten Kind-Vorrichtungen abzubrechen ist und die genannte Vorrichtung Mittel umfasst, um den Zuordnungsabbruch der oder den genannten Kind-Vorrichtungen bekanntzugeben, bevor sie sich zum Endgerät umkonfiguriert.

4. Strukturiertes Radiofrequenz-Kommunkationsnetzwerk umfassend eine Gruppe von Vorrichtungen, **dadurch gekennzeichnet, dass** wenigstens eine dieser Vorrichtungen dem Patentanspruch 3 entspricht.

## Claims

1. Method of configuring the behaviour of a device vis-à-vis a structured radiofrequency communication network, comprising:
- a step (2) of receiving, by said device, a frame comprising configuration information IC, the value of which defines a reconfiguration of the behaviour of a device vis-à-vis this network;
- a step (3) of obtaining from the received frame T the configuration information;
- a step (5) of reconfiguring the behaviour of the device vis-à-vis the network according to the obtained configuration information;
**characterised in that**, when the device is configured as a router, when the configuration information IC defines a re-configuration of the device as a terminal, and when the received frame further comprises action information IL that indicates to said device to perform an action vis-à-vis at least one child device of the network that is hierarchically associated with it for propagating frames in the network, said device further performs, before the reconfiguring step (5), a step of executing said action vis-à-vis said child device or devices,
and **in that** the action information indicates to said device to propagate said frame to said child device or devices, and said device performs a step of propagating said frame to said child device or devices before reconfiguring as a terminal,
or the action information indicates to said device to break each association with said child device or devices, and said device performs a step of notifying association break to said child device or devices before reconfiguring as a terminal.

2. Method according to claim 1, **characterized in that**, during the reconfiguring step (5), when the configuration information IC indicates that the listening means of the device must be activated, the device activates its listening means when it is on standby.

3. Device intended to be used in a structured radio-frequency communication network, comprising:
- means for receiving, by said device, a frame comprising configuration information IC, the value of which defines a reconfiguration of the behaviour of a device vis-à-vis this network;
- means for obtaining from the received frame T the configuration information;
- means for reconfiguring the behaviour of the device vis-à-vis the network according to the obtained configuration information;
**characterised in that** it further comprises means for executing an action vis-à-vis at least one child device that is hierarchically associated with it for propagating frames in the network, when the device is configured as router, when the configuration information IC defines a re-configuration of the device as a terminal, and when the received frame comprises action information IL that indicates to said device to perform said action,
and **in that** the action information indicates to said device to propagate said frame to said child device or devices, and said device comprises means for propagating said frame to said child device or devices before reconfiguring as a terminal,
or the action information indicates to said device to break each association with said child device or devices, and said device comprises means for notifying association break to said child device or devices before reconfiguring as a terminal.

4. Structured radio-frequency communication network comprising a set of devices, **characterised in that** at least one of these devices is according to claim 3.
